Europäisches Patentamt

European Patent Office

Office européen des brevets

(19)

(11) Publication number: **0 057 067**

**A2**

(12) # EUROPEAN PATENT APPLICATION

(21) Application number: **82300202.7**

(22) Date of filing: **15.01.82**

(51) Int. Cl.³: **G 06 F 13/00**

(30) Priority: **16.01.81 US 225700**

(43) Date of publication of application:
**04.08.82 Bulletin 82/31**

(84) Designated Contracting States:
**DE FR GB IT**

(71) Applicant: **SPERRY CORPORATION**
**1290 Avenue of the Americas**
**New York, N.Y. 10019(US)**

(72) Inventor: **Weidner, Albert J.**
**4840 S.Beck**
**Tempe Arizona 85282(US)**

(74) Representative: **Michaels, Peter Albert**
**SPERRY UNIVAC International Patent Department Mail**
**Station N3 W3 SPERRY UNIVAC CENTRE**
**Brentfields London NW10 8LS(GB)**

(54) **Odd byte memory addressing.**

(57) An instruction handling arrangement for a data processing system, and particularly a microinstruction operated data processing system, in which a test circuit (16 to 19, 34, 35) tests the parity of, e.g. the least significant bit of an address stored in a memory address register (11, 28). If the bit is of a predetermined parity, the test circuit (16 to 19, 34, 35) generates an interrupt to the CPU (12), or more specifically, the ALU (30). The interrupt initializes an interrupt routine which assembles the accessed information word. For the other parity, execution of any current operation continues uninterruptedly.

FIG.1

-1-

## Odd byte memory addressing

This invention relates to data processing systems, and, more particularly, to memory addressing in such systems in which words are accessible from both even byte or odd byte memory addresses.

Random access memories in data processing systems are organised into bytes and words, in which a byte consists of a predetermined number of bits, and a word consists of one or more bytes. Typically a byte is 8-bits in width, while a word consists of two or four bytes.

The distinction between a byte and a word is essentially a functional distinction rather than one of the number of bits. A byte is a sequence of bits which is operated upon by an element of the computer system (e.g., memory, register, bus, etc.) as a unit. On the other hand, a word is a sequence of bits which is manipulated by the computer in a single step (e.g., reading, storing, adding, etc.). Thus, words are manipulated at a higher language level than bytes, and, similarly, bytes are manipulated at a higher language level than bits.

When the basic word width is two or more bytes, it is important to be able to access bytes in memory individually, and not only the bytes beginning at a word boundary, for example to obtain words starting with odd address bytes. Microprogrammable processors require considerable microcode and execution time to perform a memory access operation on a word located at an "odd" memory address, i.e., not at an even word boundary.

The prior art solution of odd byte memory accessing in a system in which a word of data may cross a word boundary was for the microprogram to test the least significant bit of the memory address and manipulate the data to achieve the desired result. That is, two memory words had to be accessed and the effected byte of each word be extracted or modified. This requires a test of the memory address for every memory access performed. Clearly, the microcode to handle all possible cases is extensive, requiring considerable storage space, as well as time to execute.

Briefly, the present invention provides an instruction handling unit for data processing systems, and, in particular, for a system including a memory to store information words, and including memory accessing instructions. The unit includes a memory address register, and a test unit connected to the memory address register for determining the parity of, for example, the least significant bit of the memory address stored in the memory address register. The test unit generates an interrupt if the bit is of a predetermined parity. Rapid access to a stored memory word, even if that word is stored at an odd byte address, is facilitated by providing a logic unit which is enabled by the interrupt to access and assemble the stored word in a cache register.

The application of a hardware technique to detect odd byte memory accessing is particularly significant in a microcode driven, byte addressed, computing system, in which the basic word width or memory bus width is two or more bytes. The reason is that it is costly in microcode storage and execution time for the microprograms to access (fetch or store) a word of data on an odd byte memory address.

The approach to odd byte memory accessing according to the present invention makes use of a combination of hardware and microcode to perform this function transparent to the microprogram. Briefly, the microprogram issues a memory access with "boundary interrupts" enabled by a field in the microword. Hardware tests the least significant bit of the memory address. If the word accessed is on an even boundary the microprogram sequences or executes normally. If the word is on an odd boundary, the microinstruction is interrupted by the hardware. The hardware stores this status to indicate whether a store or fetch was being executed and the source of the interrupt handler in control store memory. In the case of a fetch, the interrupt routine performs the required manipulations, assembles the data word in a special cache register, and returns to the microinstruction causing the interrupt by setting a special hardware flag. When the original microinstruction is executed, the flag causes the data to be fetched from the cache register instead of memory. Similarly, in the case of a store, the interrupt routine stores the least significant byte in the appropriate address, sets the special hardware flag and returns to the original microinstruction. When executed with the hardware flag set, this microinstruction causes a store of only the most significant byte.

Embodiments which perform the afore-described functions will now be described by way of example and with reference to the accompanying drawings, of which:-

Figure 1 is a highly simplified block diagram of a data processing system incorporating the memory accessing system according to the present invention.

Figure 2 is a simplified block diagram of an implementation of the present invention in a microprogrammed system.

Figure 3 is a more detailed block diagram of the implementation of Figure 2.

Figure 4 is a flow chart of the operation of the present invention.

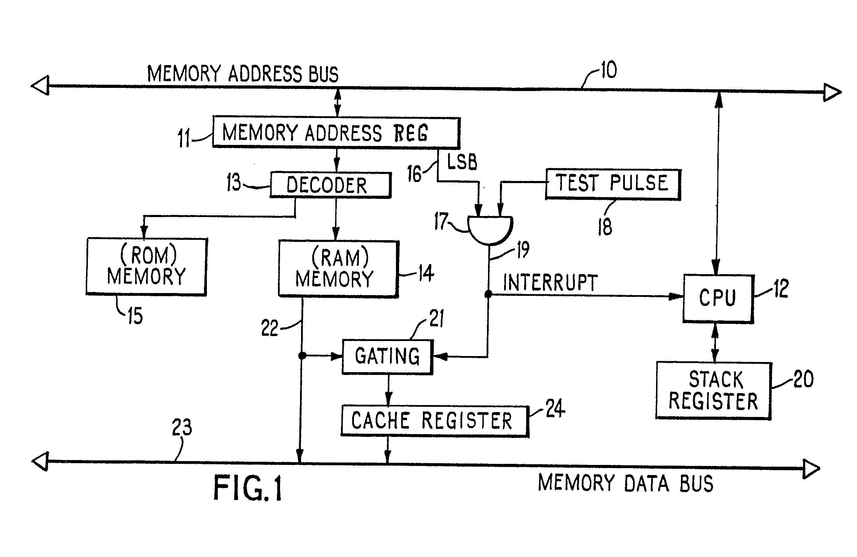

Turning first to Figure 1, there is shown a highly simplified block diagram of a data processing system incorporating the memory accessing system according to the present invention. Although the computer architecture illustrated in Figure 1 is a bus-oriented von Neumann architecture, it should be understood that the present invention can be implemented in systems without buses, or in systems which are not based upon von Neumann architecture.

Figure 1 shows a memory address bus 10 connected to a memory address register 11. The memory address register 11 functions to store the address of the memory location which is to be accessed by the CPU 12, either for the purpose of storing data therein or fetching data therefrom.

The memory address register 11 is connected to an address decoder 13, which is, in turn, connected to both RAM 13 and ROM 15 memory arrays.

The present invention is implemented in the system shown in Figure 1 by means of a tap 16 of the least significant bit (LSB) of the memory address register 11.

The LSB of the memory address register, which is either logical 0 (even) or logical 1 (odd) is connected to the input of a gate 17, which by way of example is an AND gate. A test or sample pulse source 18 is connected to the second input of the gate 17. When the second input of gate 17 is enabled, the LSB is tested. In this embodiment, a pulse appears on the output 19 of the gate 17 if the LSB is odd, and no pulse appears if the LSB is even.

In the embodiment described here, the output 19 is connected to the interrupt input of the CPU 12 which selectively suspends normal CPU processing and activates a special interrupt routine for odd byte memory accessing. The current machine states are pushed onto the stack registers 20, and the CPU executes a special interrupt routine.

Meanwhile, the output 19 is also applied to a gating circuit 21 which is connected to the output 22 of the RAM 14. The gating circuit 21 selectively permits the data to be read from RAM 14 into a special cache register 24 instead of directly onto the memory data bus 23. The fetch of the odd byte memory data, therefore, takes place from the cache register 24 rather than from the RAM 14.

Thus, the implementation of the invention shown in Figure 1 tests the LSB of the memory address register. If the LSB is odd (i.e., a logical 1), the CPU is interrupted and the data from the RAM 14 is routed to a special cache register 24 via gating circuit 21. This hardware implementation of testing whether an odd byte of memory is being accessed does not slow down operation of the CPU, and requires CPU intervention only when an odd byte memory access is detected.

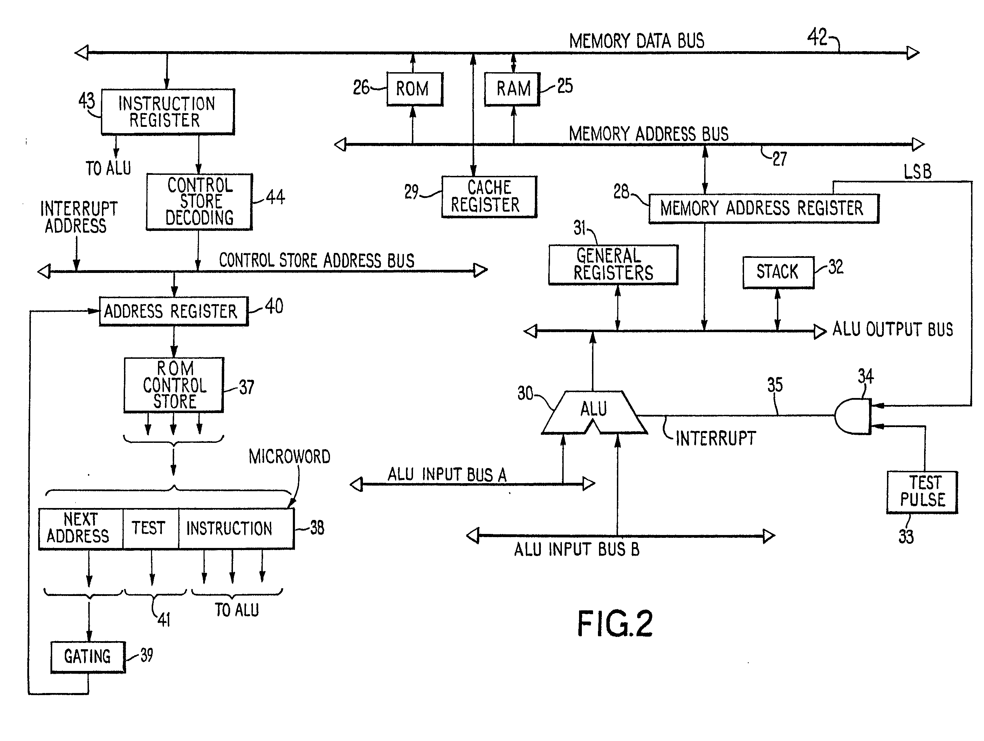

Referring now to Figure 2, there is shown an implementation of the present invention in a microprogrammed system. RAM 25 and ROM 26 memory arrays which are intended to be addressed are shown connected to the memory address bus 27. The memory address register 28 is connected to the memory address bus 27, as well as to the ALU output bus. Also connected to the ALU output bus are general registers 31, a stack 32, and the ALU 30. The inputs to the ALU·30 consist of the ALU input bus A and the ALU input bus B.

The LSB of the memory address register 28 is connected to one input of a gate 34, which has another input connected to a sample (or test) pulse source 33. The output 35 of the gate 34 is connected to selectively supply an interrupt signal to ALU 30.

The remaining components of Figure 2 are similar to those in a typical microprogrammed system and are illustrated by way of example. Such elements include the control store ROM 37 which is connected to the store address register 40. An interrupt address 36 is also applied to the control store address bus, which is in turn connected to the address register 40.

The output of the control store ROM 37 provides a microword or microinstruction 38. The microword 38 is divided into fields such as "next address", "test", and "instructions". The "next address" bits are supplied to a gating circuit 39, which is, in turn, connected to the address register 40. The next address bits are used, together with the gating circuit 39, to generate the address of the next microinstruction which is then loaded in the address register 40.

The output 41 of the test field is used to indicate to other elements of the system that interrupts are to be generated.

The output of the instruction field is used to generate instruction signals to the ALU 30.

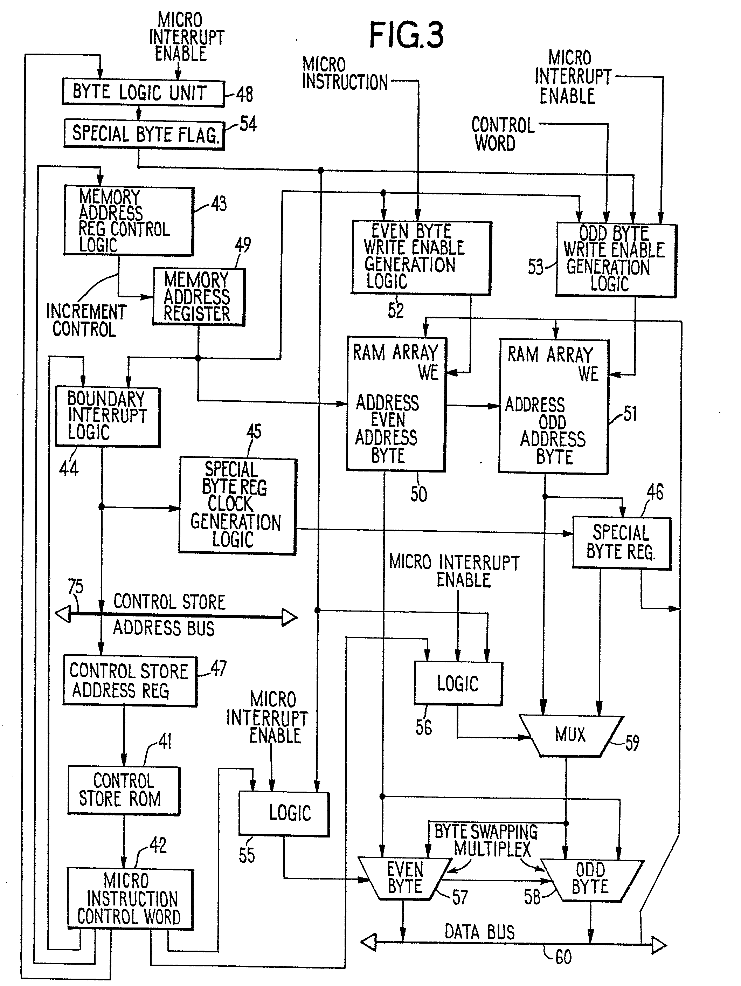

Referring to Figure 3 there is shown a more detailed block diagram of the implementation of the embodiment shown in Figure 2. The control store ROM 41 and the microinstruction control word 42 are similar to elements 37 and 38 in Figure 2. The microinstruction control word 42 is applied to the memory address register control logic unit 43, the boundary interrupt logic unit 44, and the byte logic unit 48.

The boundary interrupt logic unit 44 provides a "boundary interrupt" if an odd byte of memory is being accessed. The boundary interrupt is applied to a special byte register clock generation logic unit 45. The clock generation logic unit 45 applies a clock signal to the special byte register 46. The boundary interrupt logic unit 44 also applies an interrupt vectored address to the control store address bus 75, and, in turn, to the control store address register 47.

The memory address register control logic unit 43 generates an increment signal which is applied to the memory address register 49. The memory address is applied to the two byte-wide RAM arrays 50 and 51. The array can be a single unit but is divided into two halves for clarity in this description.

The two arrays 50 and 51, corresponding to the even byte addresses and the odd byte addresses, respectively, are enabled by corresponding even byte write enable generation logic 52 and odd byte write enable generation logic 53. These logic units 52 and 53 receive inputs from the memory address register 49 and the microinstruction control word 42. Moreover, the odd byte write enable generation logic 58 is also enabled by a microinterrupt.

Another input to the odd byte write enable generation logic 53 is the special byte flag 54 which is activated by the byte logic unit 48. The special byte flag is used to designate that the instruction to which the interrupt will return has caused a boundary interrupt and disables a second interrupt from occurring.

The special byte flag 54 is also connected to a first logic unit 55 and a second logic unit 56. The first and second logic 55 and 56 are associated with the control of byte swapping multiplexers 57 and 58.

The first logic unit 55 controls the even byte multiplexer 57. The inputs to the first logic unit 55 include signals from the microinstruction control word 42, the microinterrupt enable, and the special byte flag 54.

The second logic unit 56 controls the selection of the multiplexer unit 59 which gates either the "odd RAM" array 51 or the special byte register 46 to the byte swapping multiplexers 57 and 58. The inputs to the second logic unit 56 include signals from the microinstruction control word 42, the microinterrupt enable, and the special byte flag.

In another implementation of the present invention, the unit 59 can be replacd by tri-stating the two sources (i.e. the odd address byte array 51 and the special byte register 46) on the same bus. Suitable tri-state circuitry can be utilised. The output of the even byte and odd byte multiplexers 57 and 58 are applied to the array data bus 50.

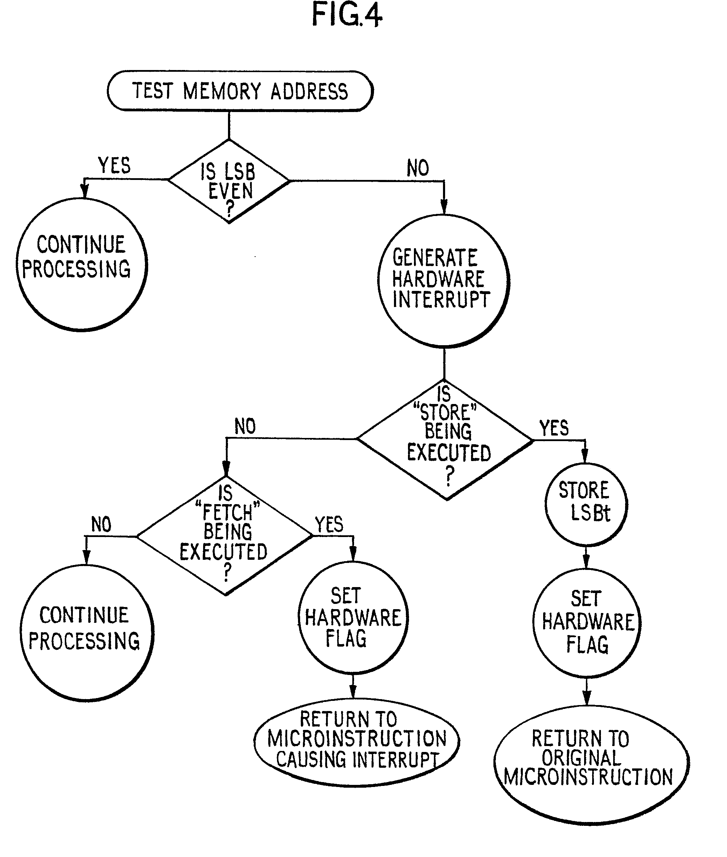

Referring now to Figure 4, there is shown a flow chart of the operation of the present invention. The basic "test memory address" decision is whether the LSB is even. If the LSB is even, processing continues in the usual manner. If the LSB is not even, a hardware interrupt is generated.

Once the hardware interrupt is generated, a test of the memory access instruction is made to determine whether a "store" instruction is being executed. If a "store" is being executed, a hardware flag is set, the least significant byte (LSBt) is stored in the next byte of the even array, and control is returned to the original microinstruction which stores the most significant byte. If a store instruction is not being executed, a test is made to determine whether a fetch instruction is being executed. If not, processing continues. If a fetch is being executed, a hardware flag is set, and processing is returned to the microinstruction causing the interrupt which will access one byte from the even array and one byte from the special byte register.

## Claims

1. An instruction handling arrangement for a data processing system including a memory (14, 15, 25, 26) to store information words and memory accessing instructions, characterized in that the instruction handling arrangement comprises an arithmetic and logic functional unit (12, 30) having an instruction input and an interrupt input to receive respectively instructions (38, 42) specifying an arithmetic or logic operation to be performed and interrupts to suspend execution of the operation, a test circuit (16 to 19, 33, 34) which tests the parity of a pre-selected bit (LSB) of a memory address stored in a memory address register (11, 28), and which generates an interrupt if the bit is of a pre-determined parity, and means (21, 24, 30, 49 to 59) to carry out an interrupt routine to assemble the accessed information word.

2. An arrangement as claimed in claim 1, wherein the selected bit of the memory address stored in the memory address register (11, 28) is the least significant bit (LSB).

3. An arrangement as claimed in claim 1 or claim 2, wherein the test circuit (16 to 19, 33, 34) generates an interrupt if the parity is odd.

4. An arrangement as claimed in any one of the preceding claims, including a cache register (24, 29) to assemble the accessed information word from the memory (14, 15, 25, 26).

5. An arrangement as claimed in any one of the precedeing claims, wherein the data processing system is a microprogrammed system employing a microinstruction word having a plurality of control fields for controlling operation of the data processing system.

6. An arrangement as claimed in claim 5, includinga boundary interrupt logic unit (44) connected to one of the control fields of the microinstruction word (38, 42) for generating a boundary interrupt which functions to store, in response to a "store" instruction, one byte in the memory array (25, 26, 50, 51) and cause the microinstruction to store the second byte, and, in response to a "fetch" instruction, to set control to cause one byte to be read from the array (50, 51) and the second from a special register.

7.     An arrangment as claimed in claim 5 or claim 6, including a special byte flag register (54) responsive to the type of memory access being performed by the currently executed memory access instruction.

8.     An arrangement as claimed in claim 7, wherein the special byte flag register (54) is set when a memory fetching operation is being executed.

FIG.1

MEMORY ADDRESS BUS 10

11 — MEMORY ADDRESS REG

13 — DECODER

16 LSB

TEST PULSE 18

17

19 INTERRUPT

(ROM) MEMORY 15

(RAM) MEMORY 14

22

21 GATING

CPU 12

STACK REGISTER 20

CACHE REGISTER 24

23 MEMORY DATA BUS

1/4

0057067

FIG.2

# FIG.3

# FIG.4

TEST MEMORY ADDRESS

IS LSB EVEN ?

YES → CONTINUE PROCESSING

NO → GENERATE HARDWARE INTERRUPT

IS "STORE" BEING EXECUTED ?

YES → STORE LSBt → SET HARDWARE FLAG → RETURN TO ORIGINAL MICROINSTRUCTION

NO → IS "FETCH" BEING EXECUTED ?

NO → CONTINUE PROCESSING

YES → SET HARDWARE FLAG → RETURN TO MICROINSTRUCTION CAUSING INTERRUPT